# EUROPEAN PATENT SPECIFICATION

(11) **EP 1 334 995 B1**
(45) Date of publication and mention of the grant of the patent: **20.01.2010**
(21) Application number: 03002843.5
(22) Date of filing: 07.02.2003
(51) Int. Cl.: C08K 5/31, C08K 5/00, C08L 33/00, F16L 11/04

(54) **Acrylic rubber compositions and heat-resistant hoses**
Acrylkautschukzusammensetzungen und hitzebeständige Schläuche
Compositions de caoutchouc acrylique et tuyaux thermo-résistants

(30) Priority: 12.02.2002 JP 2002033551
(43) Date of publication of application: 13.08.2003
(73) Proprietor: TOKAI RUBBER INDUSTRIES, LTD., Komaki-shi, Aichi-ken, 485-8550 (JP)
(72) Inventor: Noda, Masashi, Komaki-shi, Aichi-ken 485-8550 (JP); Kanbe, Shinobu, Komaki-shi, Aichi-ken 485-8550 (JP)
(74) Representative: Kuhnen & Wacker

(56) References cited:
- EP-A- 0 905 182
- JP-A- 2001 040 166
- JP-A- 2001 192 420
- US-A- 4 508 885
- DATABASE WPI Section Ch, Week 199949 Derwent Publications Ltd., London, GB; Class A14, AN 1999-580752 XP002242543 & WO 99 50349 A (JAPANESE GEON CO LTD), 7 October 1999 (1999-10-07)

## Description

### BACKGROUND OF THE INVENTION

### Field of the Invention

This invention relates to an acrylic rubber composition and a heat-resistant hose. More particularly, this invention relates to an acrylic rubber composition containing vulcanization additives not deteriorating PET (polyethylene terephthalate) yarns and a heat-resistant hose having a layer of such an acrylic rubber composition and a reinforcing layer of PET yarns.

### Description of the Related Art

It has often been the case to use rubber compositions consisting mainly of acrylic rubbers for making hoses of which heat, oil and cold resistances are required, such as oil hoses and air hoses for motor vehicles. The acrylic rubbers are generally characterized by giving a hose an excellent seal in its joint with another object, since they exhibit a good compression set in addition to heat and oil resistances.

For a carboxyl group-containing acrylic rubber, which is one of typical kinds of acrylic rubbers, it is usual to use a diamine compound as a vulcanizing agent and a guanidine compound as a vulcanization promotor, as is the case with the invention according to JP-A-2001-192420.

The guanidine compound added as a vulcanization promotor, however, tends to deteriorate PET yarns during vulcanization, or when a product is actually used (particularly under heat). When it is intended to make, for example, a hose having an acrylic rubber layer containing a guanidine compound as a vulcanization promotor and a reinforcing layer of PET yarns contacting the rubber layer, the vulcanization of the rubber layer causes the deterioration of the reinforcing layer of PET yarns. As a result, a hose of very low pressure resistance is likely to be obtained.

For such a reason, use has hitherto been avoided of inexpensive and commonly used PET yarns as a material for the reinforcing layer in a hose made by using a carboxyl group-containing acrylic rubber. There has been no alternative but to use expensive aramid yarns, polyamide yarns of low heat resistance.

EP-0 905 182 A1 discloses an acrylic elastomer composition, which comprises an acrylic elastomer obtained by copolymerization with 0.1 to 10% by weight of fumaric acid monolower alkyl ester on the basis of total monomer mixture, an aromatic diamine compound vulcanizing agent and a guanidine compound vulcanization promoter is distinguished in metal corrosion resistance, oil resistance, compression set characteristics and is effectively applicable as a vulcanization molding material for seal members or hose members to be used at contact sites with metal members, oil. This document, however, is silent with respect to PET reinforcement yarns.

### SUMMARY OF THE INVENTION

It is an object of this invention to overcome the problems as pointed out above in connection with a hose made by using a carboxyl group-containing acrylic rubber. It is another object of this invention to enable PET yarns to be used for a reinforcing layer in a hose without any problem. It is still another object of this invention to ensure that any such object be attained without impairing the outstanding properties of acrylic rubber.

The inventors of this invention have made a broad range of experimental research on vulcanization additives to be used with a carboxyl group-containing acrylic rubber. As a result, the inventors have found that the use of a metal-chelated guanidine compound as a vulcanization promotor makes it possible to prevent the deterioration of PET yarns without impairing the outstanding properties of acrylic rubber. The inventors have also found that the addition of a guanidine compound in a specific range of quantity is also possible without causing the deterioration of PET yarns and is useful for improving the properties of acrylic rubber satisfactorily.

The invention disclosed in JP-A-2001-40166 teaches the addition of a guanidine compound and a metal-chelated guanidine compound to a carboxyl group-containing acrylic rubber. It is, however, aimed solely at improving the properties, such as processing stability, heat resistance, of acrylic rubber, and does not show or suggest at all any consideration for possible effects on reinforcing yarns, or any measure for preventing the deterioration of PET yarns.

The first aspect of this invention provides the use of an acrylic rubber composition comprising a carboxyl group-containing acrylic rubber as a base material, and a metal-chelated guanidine compound added to the acrylic rubber as a vulcanization promotor, for vulcanization and use in contact with PET yarns, the composition containing the metal-chelated guanidine compound in a proportion of 1 to 15 parts by weight per 100 parts by weight of acrylic rubber.

Referring to the first aspect as set forth above, the "PET yarns" mean yarns made by using polyethylene terephthalate fibers, and include yarns made by twisting a mixture of such fibers with another kind of fibers. There is no limitation to the composition of PET yarns, or the mode of their use. Thus, there are included, for example, PET yarns forming a spiraled or braided reinforcing layer for a hose. There are also included PET yarns forming a wrapped layer for a hose having a wrapped outermost layer, or canvas contacting a rubber layer in a belt. The "metal-chelated guanidine compound" is a compound containing a portion having the chemical structure of a guanidine compound and a portion chelated with a metal element in the molecule.

The acrylic rubber composition according to the first aspect contains a metal-chelated guanidine compound as the vulcanization promotor. Therefore, the vulcanization of the acrylic rubber composition, or its use under heat is possible without causing the deterioration of PET yarns of any composition contacting it.

The proportion of the metal-chelated guanidine compound relative to the acrylic rubber is 1 to 15 phr (weight parts per hundred weight parts of rubber). Therefore, it is possible to ensure the promoted vulcanization of the acrylic rubber composition and thereby the enhancement of its good physical properties. If the proportion is less than 1 phr, it is likely that the acrylic rubber composition may be somewhat high in compression set and somewhat low in tensile strength in a normal state and after heat aging. If the proportion exceeds 15 phr, it is likely that the acrylic rubber composition may be somewhat low in heat resistance and, particularly, in elongation after heat aging.

According to a second aspect of this invention, the metal-chelated guanidine compound according to the first aspect as set forth above is a guanidine compound chelated with boron (B).

The metal-chelated guanidine compound to be employed in the acrylic rubber composition is preferably a guanidine compound chelated with a metal element of Group 3A in the periodic table, particularly boron (B), though it is not limitative. The guanidine compound chelated with a metal element of Group 3A, particularly boron (B), has a particular advantage as it is inexpensive and easily available.

According to a third aspect of this invention, the acrylic rubber composition according to the first or second aspect as set forth above further contains not more than 0.9 part by weight of a guanidine compound per 100 parts by weight of acrylic rubber.

The presence of a guanidine compound in a specific range of quantity together with a metal-chelated guanidine compound as according to the third aspect does not substantially cause the deterioration of PET yarns during the vulcanization of the acrylic rubber composition or its use under heat, but improves the properties of acrylic rubber to a still further extent. The proportion of the guanidine compound over 0.9 phr, however, results in the deterioration of PET yarns.

According to this invention, the addition of the guanidine compound is not essential. For preventing the deterioration of PET yarns as far as possible, it is preferable not to add any guanidine compound. It is, however, preferable to add a small amount of guanidine compound as stated above for maintaining the compression set (CS) of the acrylic rubber composition after vulcanization in a better range, while keeping the deterioration of PET yarns within a practically allowable range.

According to a fourth aspect of this invention, the proportion of the guanidine compound according to the third aspect as set forth above is from 0.5 to 0.9 part by weight per 100 parts by weight of acrylic rubber.

The addition of a small amount of guanidine compound is preferable for obtaining a well-balanced result in both preventing the deterioration of PET yarns and maintaining the physical properties of the acrylic rubber composition after vulcanization. More specifically, the proportion of the guanidine compound is preferably from 0.5 to 0.9 phr per 100 parts by weight of acrylic rubber. If its proportion is less than 0.5 phr, the addition of the guanidine compound is less effective.

According to a fifth aspect of this invention, the acrylic rubber according to the first to fourth aspects as set forth above contains as monomers ethyl acrylate (A), n-butyl acrylate (B) and a monomer for introducing a cross-linking group, and its (A) and (B) contents have a B/A ratio(molar ratio) in the range of 0.1 to 1.0.

The presence of n-butyl acrylate (B) in the acrylic rubber composition according to the fifth aspect ensures the outstanding properties of acrylic rubber, such as heat resistance, oil resistance and good compression set. The acrylic rubber composition according to the fifth aspect also contains ethyl acrylate (A) having a lower electron-donating property (or intramolecular electric polarization) than n-butyl acrylate, and has a B/A ratio in the range of 0.1 to 1.0. Therefore, the acrylic rubber composition hardly causes any fixing to aluminum that would be undesirable in certain cases depending on the purpose for which the composition is used.

If B/A is over 1.0, an excess of n-butyl acrylate makes the acrylic rubber composition fix to aluminum easily. If B/A is below 0.1, a deficiency of n-butyl acrylate is likely to give a composition that is relatively low in heat and oil resistances, and relatively high in compression set.

According to a sixth aspect of this invention, the amount of the monomer for introducing a cross-linking group in the acrylic rubber according to the fifth aspect is in the range of 0.5 to 2% by weight.

The amount of the monomer for introducing a cross-linking group in the acrylic rubber as a base material for the acrylic rubber composition is not basically limited, but is preferably from 0.5 to 2% by weight of acrylic rubber.

If the amount of the monomer for introducing a cross-linking group in the acrylic rubber is less than 0.5% by weight, the composition is likely to fix under heat to aluminum, since an insufficient vulcanization of acrylic rubber gives it an increased adhesive force. If its amount exceeds 2% by weight, the cross-linking groups remaining after vulcanization are likely to make the acrylic rubber composition fix to aluminum, since the monomer for introducing a cross-linking group is more electron-donating than ethyl or n-butyl acrylate.

According to a seventh aspect of this invention, there is provided a heat-resistant hose comprising a rubber layer formed from an acrylic rubber composition according to any of the first to fourth aspects as set forth above, and a layer of PET yarns contacting the rubber layer.

The heat-resistant hose according to the seventh aspect is a hose made by using a carboxyl group-containing acrylic rubber, but has its layer of PET yarns protected from deterioration, and eventually has its bursting pressure maintained at a high level. Moreover, it is a heat-resistant hose retaining the outstanding physical properties of acrylic rubber, such as compression set, tensile strength and elongation, satisfactorily.

According to an eighth aspect of this invention, there is provided a heat-resistant hose comprising a rubber layer formed from an acrylic rubber composition according to the fifth or sixth aspect as set forth above, and a layer of PET yarns contacting the rubber layer.

The heat-resistant hose according to the eighth aspect is unlikely to cause any fixing to aluminum that would be undesirable in certain cases depending on the purpose for which the heat-resistant hose is used, while sharing the advantages with the seventh aspect as set forth above.

According to a ninth aspect of this invention, the heat-resistant hose according to the seventh or eighth aspect as set forth above has one of arrangements of layers as listed below in their order beginning with an innermost layer, and at least the rubber layer contacting the inner and/or outer surface of the layer of PET yarns is a rubber layer formed from the acrylic rubber composition as set forth above:
1) Inner rubber layer/layer of PET yarns;
2) Inner rubber layer/layer of PET yarns/outer rubber layer;
3) Inner rubber layer/intermediate rubber layer/layer of PET yarns; and
4) Inner rubber layer/intermediate rubber layer/layer of PET yarns/outer rubber layer.

The heat-resistant hose according to this invention is not limited in its arrangement of layers, insofar as it has a rubber layer formed from the acrylic rubber composition as set forth above and a layer of PET yarns contacting the rubber layer. The heat-resistant hose having any of the arrangement of layers according to the ninth aspect is, however, mentioned as a preferred example.

According to a tenth aspect of this invention, the heat-resistant hose according to any of the seventh to ninth aspects as set forth above is a highly heat-resistant hose for an air or oil system on a motor vehicle.

Although the heat-resistant hose according to this invention is not limited in its use, it is preferably used as a highly heat-resistant hose for an air or oil system on a motor vehicle by virtue of the various properties and advantages of the acrylic rubber composition as stated above.

The above and other features and advantages of the invention will become more apparent from the following description.

### DETAILED DESCRIPTION OF THE INVENTION

### [Acrylic rubber composition]

The acrylic rubber composition according to this invention is an acrylic rubber composition containing a carboxyl group-containing acrylic rubber as a base material, and subjected to vulcanization and/or use (particularly use under heat) in contact with PET yarns. It contains a metal-chelated guanidine compound in a specific amount ensuring the effective promotion of vulcanization, and does not contain any guanidine compound as a vulcanization promotor, or contains not more than 0.9 part by weight of a guanidine compound per 100 parts by weight of acrylic rubber.

The acrylic rubber composition may contain beside the vulcanization promotor as mentioned above any other necessary or useful additives if they do not hinder the advantages of this invention. Examples of such additives are a vulcanizing agent, carbon black, antioxidant, a plasticizer, a processing aid, a scorch retarder, a flame retardant and a coloring agent. While there is no limitation as to the vulcanizing agent to be used, or its amount to be added, it is possible to use, for example, a polyhydric amine compound, such as a diamine compound, in the amount of, say, 0.5 to 5 phr. While there is no limitation, either, as to the carbon black to be used, or its amount to be added, it is possible to use, for example, carbon black having an average particle diameter of 30 to 60 nm, or a DBP oil absorption of at least 150 cc/100 g in the amount of, say, 50 to 80 phr.

### [Acrylic rubber]

There is no limitation as to the acrylic rubber forming the base material for the acrylic rubber composition according to this invention if it is of the carboxyl group-containing type. The acrylic rubber is a product obtained by the copolymerization of any appropriate monomeric components by any known appropriate method, such as emulsion polymerization, suspension polymerization, solution polymerization or bulk polymerization.

As the monomeric components for acrylic rubber, it is possible to use ethyl acrylate, n-butyl acrylate, ethylene, methyl acrylate, etc. as desired, including a monomer for introducing a cross-linking group.

The acrylic rubber may further contain adequate kinds of monomeric components beside those mentioned above. Examples of such monomeric components are compounds containing carboxyl groups, such as acrylic acid, methacrylic acid, crotonic acid, 2-pentenoic acid, maleic acid, fumaric acid and itaconic acid.

Other examples of monomeric components for acrylic rubber are fluorinated acrylic esters, such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate and 1,1-dihydroperfluorodecyl (meth)acrylate.

Still other examples of monomeric components for acrylic rubber are acrylic esters containing hydroxyl groups, such as 1-hydroxypropyl (meth)acrylate, 2-hydroxypropyl (meth)acrylate and hydroxyethyl (meth)acrylate.

The following are further examples of monomeric components for acrylic rubber. Acrylic esters containing tertiary amino groups, such as diethylaminoethyl (meth)acrylate and dibutylaminoethyl (meth)acrylate. Methacrylates, such as methyl methacrylate and octyl methacrylate. Alkyl vinyl ketones, such as methyl vinyl ketone. Vinyl and allyl ethers, such as vinyl ethyl ether and allyl methyl ether. Aromatic vinyl compounds, such as styrene, α-methyl styrene, chlorostyrene and vinyl toluene. Vinyl nitriles, such as acrylonitrile and methacrylonitrile.

Still further examples of monomeric components for acrylic rubber are propylene, vinyl chloride, vinylidene chloride, vinyl fluoride, vinylidene fluoride, vinyl acetate, vinyl propionate and alkyl fumarate.

The acrylic rubber preferably contains a monomer for introducing a cross-linking group, ethyl acrylate (A) and n-butyl acrylate (B) as its monomeric components, and its (A) and (B) contents have a B/A ratio (molar ratio) in the range of 0.1 to 1.0.

There is no limitation as to the monomer for introducing a cross-linking group if it is a monomer for introducing a cross-linking group containing a carboxyl group. Preferred examples of monomers for introducing a cross-linking group are maleic monoalkyl esters, fumaric monoalkyl esters, itaconic monoalkyl esters and butenedionic monoalkyl esters. While there is no limitation as to the amount of the monomer for introducing a cross-linking group that the acrylic rubber may contain, it is,preferably from 0.5 to 2% by weight.

### [Vulcanization promoter]

The acrylic rubber composition of this invention contains as a vulcanization promotor a metal-chelated guanidine compound in an amount ensuring effective promotion of vulcanization. The preferred amount of the metal-chelated guanidine compound is from 1 to 15 phr.

In the context of this invention, the metal-chelated guanidine compound is a compound containing in the molecule (a) a guanidine compound portion and (b) a portion chelated with a metal element, as stated below. While there is no limitation as to the portion chelated with a metal element (b), a chelate complex of a metal element and a diol compound is an example. Preferred examples of diol compounds are alkanediols having 2 to 8 carbon atoms between two hydroxyl groups, such as ethylene glycol, diethylene glycol and catechol, or aromatic diols. A salt formed from (a) and (b) mentioned above can be given as a preferred example of metal-chelated guanidine compound. The chelated metal element is not limited, but is preferably a Group 3A metal element, more preferably boron (B) or aluminum, and still more preferably boron (B). A specific preferred example of metal-chelated guanidine compound is represented by Chemical Formula 1 below:

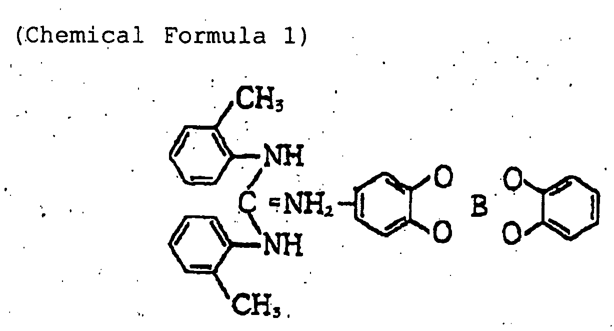

The acrylic rubber composition of this invention may contain a guanidine compound in an amount up to 0.9 phr, preferably from 0.5 to 0.9 phr, in addition to the metal-chelated guanidine compound as stated above. It is possible that it may not contain any guanidine compound. In the context of this invention, the "guanidine compound" means a so-called non-chelated guanidine compound excluding at least any metal-chelated guanidine compound. While there is no limitation as to the guanidine compound that can be used, it is possible to use, for example, one represented by general formula, H₂N-(C=NH)-[NH- (C=NH)]ₙ-NH₂ (where n is an integer of 0 or above, preferably 0 or 1). It is alternatively possible to use one represented by the general formula above, but having a residual alkyl, phenyl, tolyl, xylyl, naphthyl or anthracenyl group substituted for a part or all of the residual hydrogen groups. More specific examples are diphenylguanidine, di-o-tolylguanidine and 1-o-tolylbiguanide.

### [Heat-resistant hose]

The heat-resistant hose according to this invention is not limited in its construction if it has a rubber layer formed from any of the acrylic rubber compositions described above and a layer of PET yarns contacting the rubber layer. The heat-resistant hose is not limited in its use, either.

As regards the layer structure of the heat-resistant hose, it is also possible to construct a composite-layer hose having, as an intermediate or outer layer in addition to the layer of the acrylic rubber composition according to this invention, a rubber layer formed from acrylic rubber other than the acrylic rubber composition according to this invention, or from rubber other than acrylic rubber. While there is no limitation as to the rubber other than acrylic rubber, examples are fluororubber, fluorine-modified acrylic rubber, chlorohydrin rubber, CSM (chlorosulfonated polyethylene rubber), CR (chloroprene rubber), NBR (acrylonitrile-butadiene rubber) and ethylene-propylene rubber. If the acrylic rubber composition is unlikely to fix to aluminum easily as stated before, it is possible to use it for an innermost layer that will contact an aluminum pipe, and form a reinforcing layer of PET yarns around it.

Referring to the layer structure of the heat-resistant hose more specifically, it is possible to give as preferred examples any of the layer structures shown below in the order beginning with the innermost layer. In the examples of layer structures shown below, at least the rubber layer contacting the inner surface of the layer of PET yarns and/or the rubber layer contacting its outer surface is a rubber layer formed from the acrylic rubber composition according to this invention. If a rubber layer formed from the acrylic rubber composition according to this invention is formed on only one of the inner and outer surfaces of the layer of PET yarns, the rubber layer on the other surface thereof is preferably formed from rubber that is definitely unlikely to deteriorate PET yarns, for example, EPDM (ethylene-propylene-diene terpolymer rubber), NBR or CR. The rubber layer not contacting the layer of PET yarns may be formed from the acrylic rubber composition according to this invention, or any other acrylic rubber composition, or any other kind of rubber composition.
1) Inner rubber layer/layer of PET yarns;
2) Inner rubber layer/layer of PET yarns/outer rubber layer;
3) Inner rubber layer/intermediate rubber layer/layer of PET yarns;
4) Inner rubber layer/intermediate rubber layer/layer of PET yarns/outer rubber layer.

Highly heat-resistant hoses for air or oil in a motor vehicle can be mentioned as preferred examples of the uses of the heat-resistant hose according to /this invention. Supercharger hoses are examples of highly heat-resistant hoses for air. Engine oil cooler hoses, AT (automatic transmission) oil cooler hoses and power steering hoses are examples of highly heat-resistant hoses for oil. If the acrylic rubber composition is of the type that is unlikely to fix to aluminum easily as stated before, preferred examples of uses are a hose for a turbocharger (supercharger), a hose for an intercooler, and a hose for an intake manifold in a motor vehicle.

### EMBODIMENTS

### [Preparation of unvulcanized acrylic rubber compositions]

Unvulcanized acrylic rubber compositions were prepared according to Examples 1 to 7 of this invention and Comparative Examples 1 and 2 as shown in Table 1. The numerical values in Table 1 indicate parts by weight. "Acrylic rubber - 1" and "Acrylic rubber - 2" in Table 1 indicate acrylic rubbers used as base materials, and their monomeric compositions are shown in Table 2. "Butenedionic monoalkyl ester" in Table 2 is a monomer for introducing a cross-linking carboxyl group, as is well known.

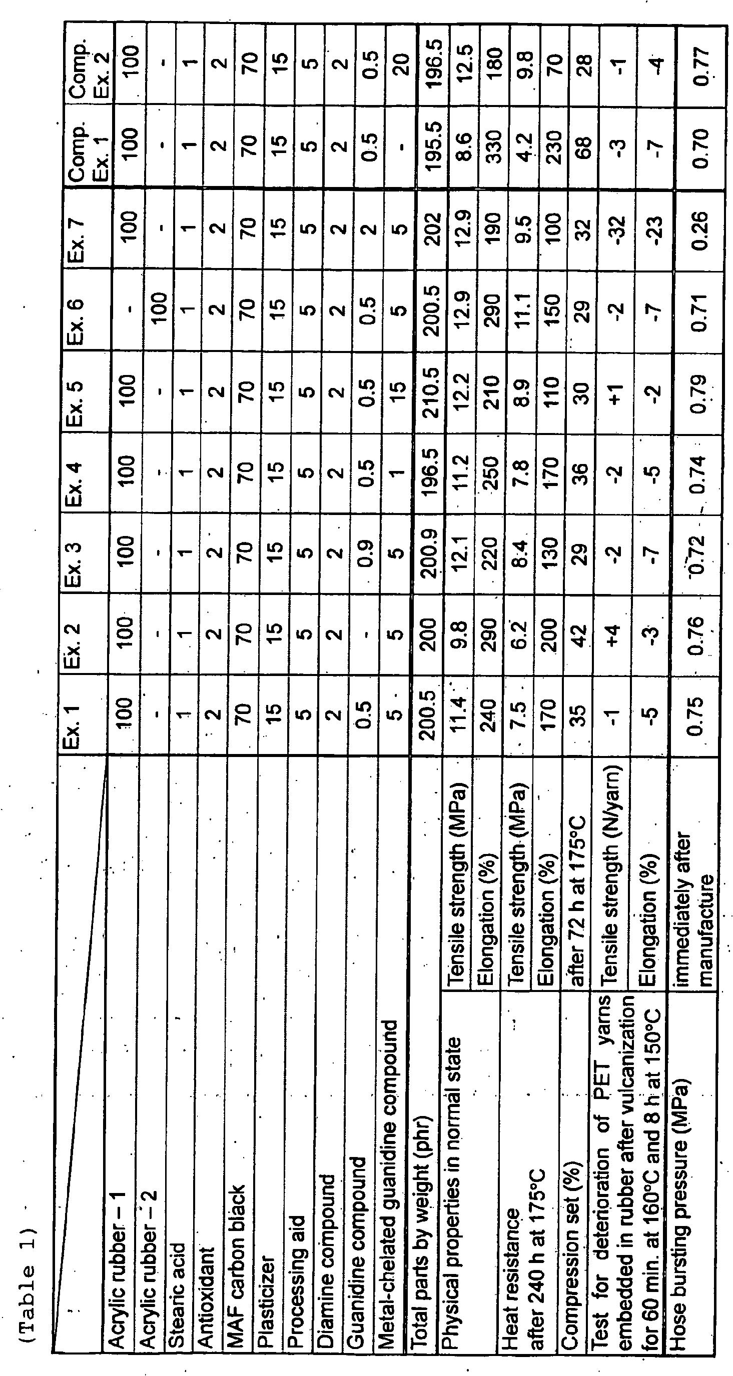

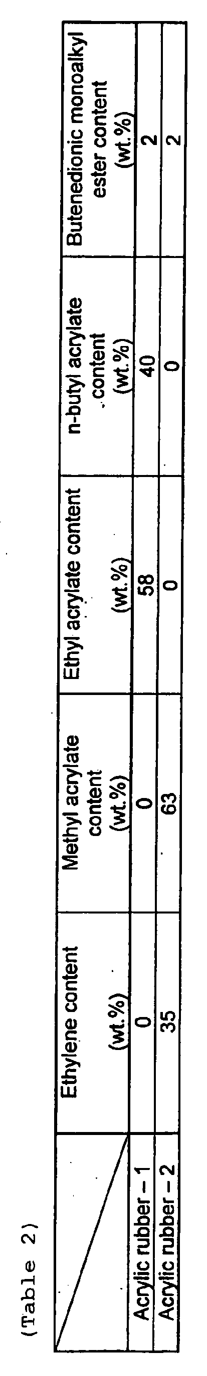

Products having tradenames as shown below were specifically used as the additives shown in Table 1 as being added to acrylic rubber. "Runac S30®", product of Kao Corporation, was used as stearic acid. "Naugard 445®", product of Uniroyal Chemical Company, Inc., was used as aging inhibitor. "SEAST 116®", product of Tokai Carbon Co., Ltd., was used as MAF carbon black. "ADEKA RS-735®", product of Asahi Denka Kogyo K.K., was used as plasticizer. "Diak #1®", product of DuPont Dow Elastomers L.L.C., was used as diamine compound. The chemical name of this product is 2,2-bis[4-(4-aminophenoxy)phenyl]propane. "NOCCELER DT®", product of Ouchi Shinko Chemical Industrial Co., Ltd., was used as guanidine compound. The chemical name of this product is di-o-tolylguanidine. "NOCCELER PR®", product of Ouchi Shinko Chemical Industrial Co., Ltd., was used as metal-chelated guanidine compound. The chemical name of this product is the di-o-tolylguanidine salt of dicatechol borate.

Unvulcanized acrylic rubber was prepared according to each of Examples 1 to 7 and Comparative Examples 1 and 2, and was kneaded with a mixture of additives excluding those for vulcanization (diamine, guanidine and metal-chelated guanidine compounds) in a 1.7 liter Banbury mixer. Then, the vulcanization additives were admixed by using 8-inch rolls to prepare an unvulcanized acrylic rubber composition according to each example.

### [Evaluation of unvulcanized acrylic rubber compositions]

### (Physical properties in normal state)

An unvulcanized rubber sheet having a thickness of 2 mm was formed from the unvulcanized acrylic rubber composition according to each example by means of 8-inch mixing rolls. Each unvulcanized rubber sheet was subjected to 60 minutes of press vulcanization at 160°C and then eight hours of oven vulcanization at 150°C to yield a test specimen of rubber in sheet form for evaluation as to physical properties in the normal state. Each test specimen of rubber was evaluated for tensile strength (MPa) and elongation (%) in accordance with JIS K6251. The results of the evaluation are shown under "Physical properties in normal state" in Table 1.

### (Heat resistance)

The foregoing was repeated for forming a test specimen of rubber for evaluation as to heat resistance from the unvulcanized acrylic rubber composition according to each example. It was evaluated for tensile strength (MPa) and elongation (%) after 240 hours of heat aging at 175°C in accordance with JIS K6257. The results of the evaluation are shown under "Heat resistance" in Table 1.

### (Compression set)

A large test specimen according to JIS K6262 was formed from the unvulcanized acrylic rubber composition according to each example by 60 minutes of press vulcanization at 160°C and eight hours of oven vulcanization at 150°C. It was evaluated for compression set (%) after 72 hours of heat aging at 175°C in accordance with JIS K6262. The results of the evaluation are shown under "Compression set" in Table 1.

### (Test for deterioration of PET yarns)

Two unvulcanized rubber sheets measuring 300 mm by 50 mm by 1.7 mm were prepared from the unvulcanized acrylic rubber composition according to each example by using 8-inch mixing rolls. Five twisted yarns made of PET fibers and having a fineness of 1500 deniers and a length of 300 mm were laid on one of the unvulcanized rubber sheets according to each example substantially in a parallel and equally spaced relation to one another. Then, the other unvulcanized rubber sheet was closely superposed thereon to form a laminate having PET yarns sandwiched between two unvulcanized rubber sheets.

Each such laminate was subjected to 60 minutes of press vulcanization at 160°C and then eight hours of oven vulcanization at 150°C. Then, the five PET yarns were removed by opening the laminate, and were examined for their tensile strength (N/yarn) by a method conforming to JIS L1013 8.5. The PET yarns were also examined for their elongation (%) by a method conforming to JIS L1013 8.5. Averages were taken from the results shown by the five PET yarns, and their differences from the results shown by crude yarns (PET yarns as described above, but not subjected to any deterioration test) are shown under "Test for deterioration of PET yarns embedded in rubber" in Table 1.

### [Evaluation of experimentally made hoses for bursting pressure]

### (Manufacture of heat-resistant hoses)

A heat-resistant hose having an inner rubber layer with a thickness of 3 mm, an outer rubber layer with a thickness of 2 mm and an intermediate reinforcing layer and having an inside diameter of 40 mm and a length of 450 mm was manufactured from the unvulcanized acrylic rubber composition according to each example. Each heat-resistant hose had its inner rubber layer formed from the unvulcanized acrylic rubber composition according to each example. The reinforcing layer was formed by braiding in a ratio of piece × carrier of 1 × 48, using PET reinforcing yarns for the reinforcing layer at a braiding angle of 55°. The outer rubber layer of each hose was of the same material with its inner rubber layer.

### (Hose bursting pressure)

The heat-resistant hose according to each example was joined immediately after its manufacture with a cast aluminum pipe of the bulged type having a straight diameter of 41 mm and conforming to JASO M101. It was tightened with a tightening torque of 3 N · m by a worm gear clamp conforming to JASO F207. Then, the hose was filled with water and its pressure was increased until the hose burst. The maximum pressure (MPa) that caused the hose to burst was measured. The result of the measurement on the heat-resistant hose according to each example is shown under "Hose bursting pressure" in Table 1.

While the preferred embodiment has been described, variations thereto will occur to those skilled in the art within the scope of the present inventive concepts which are delineated by the following claims.

## Claims

1. Use of an acrylic rubber composition in contact with PET yarns or for vulcanization in contact with PET yarns, wherein the acrylic rubber composition comprises a carboxyl group-containing acrylic rubber as its base material, and a metal-chelated guanidine compound added to the acrylic rubber as a vulcanization promotor, and wherein the composition contains the metal-chelated guanidine compound in a proportion of 1 to 15 parts by weight per 100 parts by weight of acrylic rubber.

2. The use according to claim 1, wherein the metal-chelated guanidine compound is a guanidine compound chelated with boron (B).

3. The use according to claim 1 or 2, further comprising not more than 0.9 part by weight of a non-chelated guanidine compound per 100 parts by weight of acrylic rubber.

4. The use according to claim 3, wherein the amount of the non-chelated guanidine compound is from 0.5 to 0.9 part by weight per 100 parts by weight of acrylic rubber.

5. The use according to any of claims 1 to 4, wherein the acrylic rubber contains ethyl acrylate (A), n-butyl acrylate (B) and a monomer for introducing a cross-linking group as its monomeric components and the amounts of (A) and (B) have a B/A ratio in the range of 0.1 to 1.0, wherein the monomer for introducing a cross-linking group is a monomer containing a carboxyl group.

6. The use according to claim 5, wherein the amount of the monomer for introducing a cross-linking group that the acrylic rubber contains is in the range of 0.5 to 2% by weight.

7. A heat-resistant hose comprising a rubber layer formed from the acrylic rubber composition as defined in any of claims 1 to 4 and a layer of PET yarns contacting the rubber layer.

8. A heat-resistant hose comprising a rubber layer formed from the acrylic rubber composition as defined in claim 5 or 6 and a layer of PET yarns contacting the rubber layer.

9. The heat-resistant hose according to claim 7 or 8, wherein the hose has one of arrangements of layers as listed below in their order beginning with an innermost layer, and at least the rubber layer contacting the inner and/or outer surface of the layer of PET yarns is a rubber layer formed from the acrylic rubber composition:
1) Inner rubber layer/layer of PET yarns;
2) Inner rubber layer/layer of PET yarns/outer rubber layer;
3) nner rubber layer/intermediate rubber layer/layer of PET yarns; and
4) Inner rubber layer/intermediate rubber layer/layer of PET yarns/outer rubber layer.

10. Use of the heat-resistant hose according to any of claims 7 to 9 as a highly heat-resistant hose for air or oil in a motor vehicle.

## Patentansprüche

1. Verwendung einer Acrylgummi-Zusammensetzung, die mit PET-Garnen in Kontakt steht oder für die Vulkanisation in Kontakt mit PET-Garnen, wobei die Acrylgummi-Zusammensetzung einen Carboxylgruppen enthaltenden Acrylgummi als deren Ausgangmaterial umfasst und eine Metall-chelierte Guanidinverbindung, die zu dem Acrylgummi als Vulkanisationspromotor zugegeben wird, und wobei die Zusammensetzung die Metall-chelierte Guanidinverbindung in einem Anteil von 1 bis 15 Gewichtsanteilen auf 100 Gewichtsanteile des Acrylgummis einhält.

2. Verwendung nach Anspruch 1, wobei die Metall-chelierte Guanidinverbindung eine mit Bor (B) chelierte Guanidinverbindung ist.

3. Verwendung nach Anspruch 1 oder 2, ferner nicht mehr als 0,9 Gewichtsanteile einer nicht Metall-chelierten Guanidinverbindung auf 100 Gewichtsanteile des Acrylgummis umfassend.

4. Verwendung nach Anspruch 3, wobei die Menge der nicht Metall-chelierten Guanidinverbindung von 0,5 bis 0,9 Gewichtsanteile auf 100 Gewichtsanteile des Acrylgummis beträgt.

5. Verwendung nach einem der Ansprüche 1 bis 4, wobei der Acrylgummi Ethylacrylat (A), N-Butylacrylat (B) und ein Monomer zum Einführen einer Vernetzungsgruppe als dessen Monomerbestandteile umfasst und die Mengen von (A) und (B) ein B/A-Verhältnis in einem Bereich von 0,1 bis 1,0 aufweisen, wobei das Monomer zum Einführen der Vernetzungsgruppe ein eine Carboxylgruppe enthaltendes Monomer ist.

6. Verwendung nach Anspruch 5, wobei die Menge des Monomers zum Einführen der Vernetzungsgruppe, die der Acrylgummi enthält, in einem Bereich von 0,5 bis 2 Gewichtsprozent liegt.

7. Wärmebeständiger Schlauch, umfassend eine Gummischicht, die aus der nach einem der Ansprüche 1 bis 4 definierten Acrylgummi-Zusammensetzung gebildet wird, und eine in Kontakt mit der Gummischicht stehende Schicht aus PET-Garnen.

8. Wärmebeständiger Schlauch, umfassend eine Gummischicht, die aus der nach einem der Ansprüche 5 bis 6 definierten Acrylgummi-Zusammensetzung gebildet wird, und eine in Kontakt mit der Gummischicht stehende Schicht aus PET-Garnen.

9. Wärmebeständiger Schlauch nach Anspruch 7 oder 8, wobei der Schlauch eine wie unten aufgeführte Anordnung von Schichten, in der Reihenfolge beginnend mit der innersten Schicht, aufweist, und wenigstens die Gummischicht, die in Kontakt mit der inneren und/oder äußeren Oberfläche der Schicht von PET-Garnen steht, eine mit der Acrylgummi-Zusammensetzung gebildete Gummischicht ist:
1) innere Gummischicht/Schicht aus PET-Garnen;
2) innere Gummischicht/Schicht aus PET-Garnen/äußere Gummischicht ;
3) innere Gummischicht/Zwischengummischicht/ Schicht aus PET-Garnen; und
4) innere Gummischicht/ Zwischengummischicht/ Schicht aus PET-Garnen /äußere Gummischicht.

10. Verwendung des wärmebeständigen Schlauchs nach einem der Ansprüche 7 bis 9 als hoch wärmebeständiger Schlauch für Luft oder Öl in einem Motorfahrzeug.

## Revendications

1. Utilisation d'une composition de caoutchouc acrylique en contact avec des filaments de PET ou pour la vulcanisation en contact avec des filaments de PET, la composition de caoutchouc acrylique comprenant un caoutchouc acrylique contenant un groupe carboxyle en tant que son matériau de base, et un composé guanidine chélaté avec un métal ajouté au caoutchouc acrylique en tant que promoteur de vulcanisation, la composition contenant le composé guanidine chélaté avec un métal en une proportion de 1 à 15 parties en poids pour 100 parties en poids de caoutchouc acrylique.

2. Utilisation selon la revendication 1, dans laquelle le composé guanidine chélaté avec un métal est un composé guanidine chélaté avec du bore (B).

3. Utilisation selon la revendication 1 ou 2, ne comprenant en outre pas plus de 0,9 partie en poids d'un composé guanidine non chélaté pour 100 parties en poids de caoutchouc acrylique.

4. Utilisation selon la revendication 3, dans laquelle la quantité du composé guanidine non chélaté est de 0,5 à 0,9 partie en poids pour 100 parties en poids du caoutchouc acrylique.

5. Utilisation selon l'une quelconque des revendications 1 à 4, dans laquelle le caoutchouc acrylique contient de l'acrylate d'éthyle (A), de l'acrylate de n-butyle (B) et un monomère pour l'introduction d'un groupe de réticulation en tant que ses composants monomères et les quantités de (A) et (B) ont un rapport de A/B dans la plage de 0,1 à 1,0, le monomère pour l'introduction d'un groupe de réticulation étant un monomère contenant un groupe carboxyle.

6. Utilisation selon la revendication 5, dans laquelle la quantité du monomère d'introduction d'un groupe de réticulation que contient le caoutchouc acrylique se trouve dans la plage de 0,5 à 2 % en poids.

7. Tuyau thermorésistant comprenant une couche de caoutchouc formée par la composition de caoutchouc acrylique selon l'une quelconque des revendications 1 à 4 et une couche de filaments de PET en contact avec la couche de caoutchouc.

8. Tuyau thermorésistant comprenant une couche de caoutchouc formée par la composition de caoutchouc acrylique selon la revendication 5 ou 6 et une couche de filaments de PET en contact avec la couche de caoutchouc.

9. Tuyau thermorésistant selon la revendication 7 ou 8, dans laquelle le tuyau a l'une des configurations de couches décrites ci-dessous dans l'ordre, commençant avec une couche interne, et au moins la couche de caoutchouc en contact avec la surface interne et/ou externe de la couche de filaments de PET est une couche de caoutchouc formée à partir de la composition de caoutchouc acrylique :
1) couche interne de caoutchouc/couche de filaments de PET ;
2) couche interne de caoutchouc/couche de filaments de PET/couche externe de caoutchouc ;
3) couche interne de caoutchouc/couche intermédiaire de caoutchouc/couche de filaments de PET ; et
4) couche interne de caoutchouc/couche intermédiaire de caoutchouc/couche de filaments de PET/couche externe de caoutchouc.

10. Utilisation du tuyau thermorésistant selon l'une quelconque des revendications 7 à 9 en tant que tuyau grandement thermorésistant pour l'air ou l'huile dans un véhicule motorisé.
